# EUROPÄISCHE PATENTSCHRIFT

(11) **EP 1 905 727 B1**
(45) Veröffentlichungstag und Bekanntmachung des Hinweises auf die Patenterteilung: **07.07.2010**
(21) Anmeldenummer: 07450165.1
(22) Anmeldetag: 27.09.2007
(51) Int. Cl.: B67B 1/00

(54) **Lager- und Transporteinrichtung für Bügelverschlüsse von Behältnissen**
Storage and transport device for swing stoppers for containers
Dispositif de stockage et de transport pour fermetures à étrier de récipients

(30) Priorität: 28.09.2006 AT 17772006
(43) Veröffentlichungstag der Anmeldung: 02.04.2008
(73) Patentinhaber: Jarolim Innovative Automation Sondermaschinen, 8121 Deutschfeistritz 496 (AT)
(72) Erfinder: Jarolim, Ludwig , Ing., 8112 Gratwein (AT)
(74) Vertreter: Schwarz & Partner

(56) Entgegenhaltungen:
- EP-A- 0 256 403
- EP-A- 1 176 099
- WO-A-2005/110910
- DE-U1- 20 014 580

## Beschreibung

Die Erfindung betrifft eine Verwendung einer Leiste zur Lagerung und zum Transport von Bügelverschlüssen von Behältnissen, vorzugsweise von Flaschen, und eine Einrichtung zum Manipulieren einer derartigen Leiste.

Bügelverschlüsse für Flaschen werden in der Regel von einem Metall verarbeitenden Betrieb erzeugt, da die Bügelverschlüsse in der Regel aus Stahldraht gefertigt sind. Sie fallen von der Erzeugungsanlage in einen Transportbehälter, in dem sie völlig ungeordnet zu liegen kommen, und werden dann dem Flaschenerzeuger geliefert, bei dem sie an den Flaschen angeordnet werden.

Infolge der ungeordneten Lage im Transportbehälter kommt es zu Verhakungen der Bügelverschlüsse untereinander, wodurch das Entnehmen eines einzelnen Bügelverschlusses erschwert ist. Es erweist sich als notwendig, einen Bügelverschluss von den anderen, mit denen er verhakt ist, zu lösen, was nicht nur zeitaufwendig ist, sondern zusätzliche und auch unvorhersehbare Manipulationsbewegungen des Personals erfordert. Dies bedeutet, dass ein Vereinzeln der Bügelverschlüsse unregelmäßige Bewegungen einer Hand erfordert, sodass eine Automatisierung nicht möglich ist.

Die Erfindung bezweckt die Vermeidung dieser Nachteile und Schwierigkeiten und stellt sich die Aufgabe, eine Einrichtung zum Lagern und Transportieren von Bügelverschlüssen zu schaffen, mit der es möglich ist, Bügelverschlüsse vom Erzeuger derselben geordnet zu übernehmen und in geordnetem Zustand dem Erzeuger eines Behältnisses, insbesondere dem Flaschenhersteller, zur Verfügung zu stellen, sodass umständliche Manipulationen, insbesondere beim Entnehmen eines Bügelverschlusses und Aufbringen desselben an einem Behältnis, wie einer Flasche, vermieden werden können. Das Montieren eines Bügelverschlusses soll in einer kurzen Zeitspanne und ohne Komplikationen durchgeführt werden können. Weiters soll durch die Erfindung eine weitgehende bzw. vollständige Automatisierung sowohl beim Versenden der Bügelverschlüsse als auch beim Empfang der Bügelverschlüsse und beim Aufbringen der Bügelverschlüsse auf Behältnissen ermöglicht sein.

Diese Aufgabe wird gelöst durch die Verwendung einer Leiste zur Lagerung und zum Transport von Bügelverschlüssen von Behältnissen, wobei die Leiste mit mindestens einem Teil ihres Querschnitts einen Querschnitt aufweist, der einem von einem Teil des Bügelverschlusses eingegrenzten Querschnitt entsprechend - jedoch unter Einhaltung eines ein Gleiten der Bügelverschlüsse entlang der Leiste ermöglichenden Spiels - gestaltet ist, und deren Länge zur Aufnahme einer Vielzahl von Bügelverschlüssen bemessen ist.

Eine bevorzugte Leiste für Bügelverschlüsse mit jeweils einem den Verschlusskörper tragenden Verschlussbügel und einem daran angelenkten Betätigungsbügel, der mit in einander gegenüberliegende Öffnungen eines Behältnisses einsetzbaren Achsabschnitten versehen ist, die in Ansicht in Richtung derAchsabschnitte an einem Bügelteil, der sich etwa rechtwinkelig von einem Betätigungsteil des Betätigungsbügels erstreckt, angeformt sind, ist dadurch gekennzeichnet, dass die Leiste eine Breite entsprechend der Breite des Bügelteils, an dem die Achsabschnitte angeformt sind, und eine Höhe entsprechend der kürzesten Distanz der Achsabschnitte von einer vom Betätigungsteils des Betätigungsbügels gebildeten Ebene aufweist.

Vorzugsweise ist die Leiste endseitig mit lösbaren Sperren, die ein Aufgleiten und ein Abgleiten eines Bügelverschlusses auf die bzw. von der Leiste verhindern, versehen, wobei zweckmäßig jede Sperre einen sich senkrecht zur Höhe der Leiste und parallel zur Breite der Leiste erstreckenden und in seiner Längsrichtung in der Leiste verschiebbaren Stift aufweist, der vorzugsweise mittels Federkraft in Sperrstellung und vorzugsweise auch in Freigabestellung festhaltbar ist.

Für eine Automatisierung ist eine Einrichtung zum Manipulieren einer derartigen Leiste gemäß Anspruch 5 dargestellt.

Gemäß einer bevorzugten Ausführungsform ist die Einrichtung dadurch gekennzeichnet, dass die Leiste mit Manipulationsöffnungen, in die das Manipulationswerkzeug einsetzbar und an der Leiste fixierbar ist, versehen ist.

Vorteilhaft umfasst die Abgabeeinrichtung eine Fördereinrichtung, wobei die Fördereinrichtung, vorzugsweise ein Förderband, mit den an der Leiste befindlichen Bügelverschlüssen einer oberhalb der Fördereinrichtung mittels des Manipulationswerkzeuges in Stellung gebrachten Leiste in Kontakt gelangt und unter Mitnahme der Bügelverschlüsse betätigbar ist.

Eine weitere bevorzugte Ausführungsform zur weitestgehenden Automatisierung ist dadurch gekennzeichnet, dass die Abgabeeinrichtung eine bogenförmig gestaltete Abgabeleiste, vorzugsweise mit Querschnittsabmessungen der Leiste, anschließend an die in Abgabestellung gebrachte Leiste zwecks Weiterförderns eines Bügelverschlusses zu einer Montagestation zur Montage eines Bügelverschlusses an einem Behältnis aufweist, wobei vorteilhaft die Montagestation am Ende der Abgabeleiste mit ein Abgleiten eines Bügelverschlusses von der Abgabeleiste verhindernden Halterungen versehen ist, welche Halterungen von einer den Bügelverschluss haltenden Stellung in eine den Bügelverschluss freigebende Stellung und umgekehrt bewegbar sind.

Zweckmäßig ist die Abgabeeinrichtung mit einer Vereinzelungseinrichtung für eine Einzelabgabe jeweils eines Bügelverschlusses versehen.

Zur Automatisierung des Aufbringens von Bügelverschlüssen auf eine Leiste weist die Aufgabeeinrichtung vorteilhaft eine Bogenleiste, vorzugsweise mit Querschnittsabmessungen der Leiste, auf, wobei zweckmäßig mittels einer an der Aufgabeeinrichtung vorgesehenen Zähleinrichtung die auf eine Leiste gleitenden Bügel gezählt werden können, sodass - wenn die Leiste vollständig bestückt ist - eine andere leere Leiste in Stellung zur Bogenleiste gebracht werden kann. Zuvor tritt eine Sperrvorrichtung in Funktion, um ein weiteres Gleiten eines Bügelverschlusses auf eine vollständig mit Bügelverschlüssen bestückte Leiste zu verhindern.

Gemäß einer bevorzugten Ausführungsform umfasst das Manipulationswerkzeug zumindest einen Saugkopf, der an der Leiste ansetzbar ist und über Mitnahme der Leiste zur Aufgabeeinrichtung und/oder Abgabeeinrichtung bewegbar ist. Zweckmäßig sind zwei oder mehrere Saugköpfe in Reihe zum Ansetzen an einer Leiste vorgesehen, und die Saugköpfe weisen vorzugsweise eine in Richtung der aufzunehmenden Leiste ausgerichtete Ovalform auf.

Die Erfindung ist nachfolgend anhand der Zeichnung an einem Ausführungsbeispiel näher erläutert, worin Fig. 1 eine Leiste in Seitenansicht, Fig. 2 in Stirnansicht, Fig. 3 in Draufsicht und Fig. 4 in Schrägrissdarstellung, jeweils bestückt mit Bügelverschlüssen, veranschaulichen. Fig. 5 zeigt die Verwendung der erfindungsgemäßen Leisten an einer Aufgabeeinrichtung für Bügelverschlüsse in Seitenansicht und Fig. 6 in Schrägrissdarstellung. Fig. 7 veranschaulicht eine Abgabeeinrichtung für Bügelverschlüsse in Schrägrissdarstellung, Fig. 8 in Draufsicht und Fig. 9 zeigt ein Detail in teilweise geschnittener Seitenansicht.

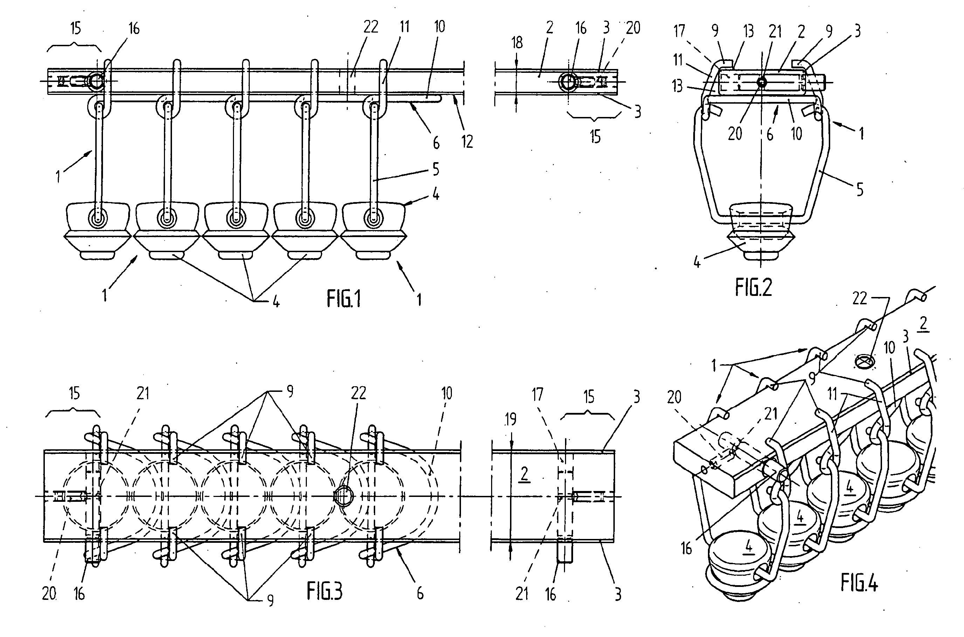

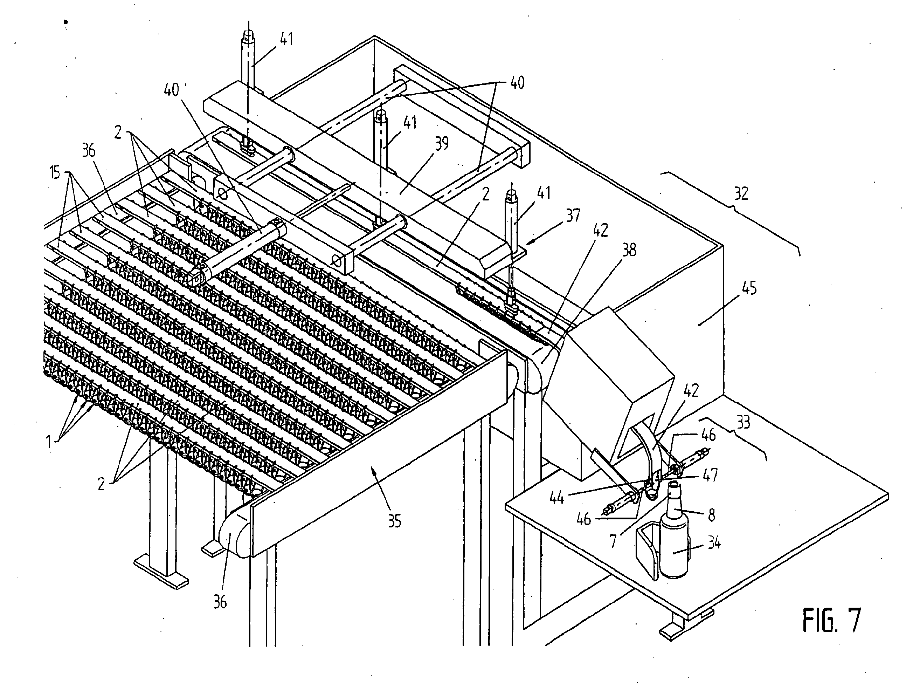

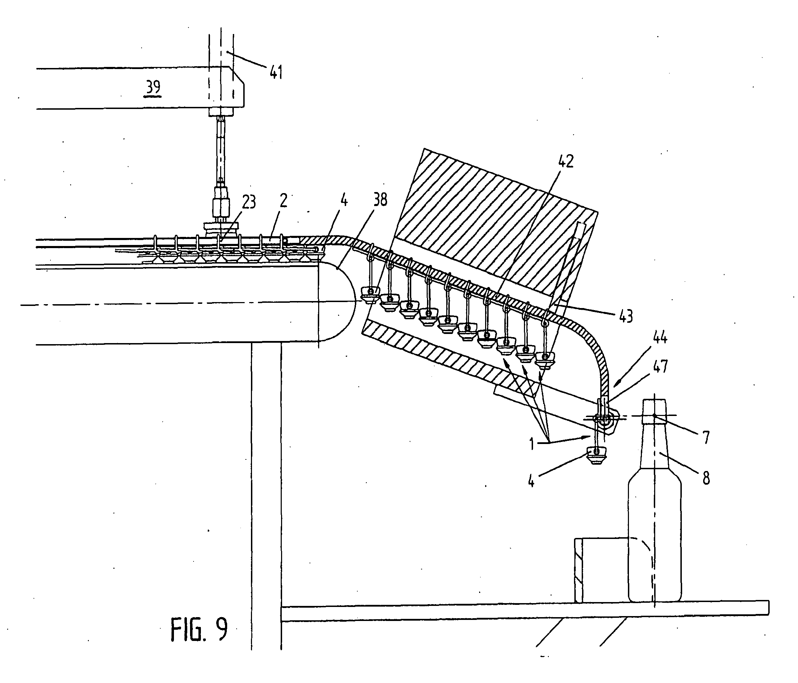

Wie aus den Fig. 1 bis 4 zu erkennen ist, sind Bügelverschlüsse 1 auf einer Leiste 2 mit Rechteckquerschnitt - abgesehen von den gebrochenen Längskanten 3 - aufgefädelt, welche Leiste 2 als Lager- und Transporteinrichtung für Bügelverschlüsse 1 dient. Jeder Bügelverschluss 1 weist einen den Verschlussskörper 4 tragenden Verschlussbügel 5 und einen daran angelenkten Betätigungsbügel 6 auf, der mit in einander gegenüberliegende Öffnungen 7 eines Flaschenhalses 8 (vgl. Fig. 7 und Fig. 9) einsetzbaren Achsabschnitten 9 versehen ist. Betrachtet man den Bügelverschluss 1 in Richtung der Achsabschnitte 9, so ist zu erkennen, dass ein Betätigungsteil 10 des Betätigungsbügels 6 sich etwa senkrecht zu dem die Achsabschnitte 9 tragenden Teil 11 des Betätigungsbügels 6 erstreckt.

Die als Lager- und Transporteinrichtung dienende Leiste 2 weist einen Querschnitt auf, der es ermöglicht, den die Achsabschnitte 9 tragenden Teil 11 des Betätigungsbügels 6 auf die Leiste 2 aufzufädeln, wobei der Betätigungsteil 10 des Betätigungsbügels 6 an einer Seite der Leiste 2 - gemäß Fig. 1 die Unterseite 12 der Leiste 2 - zur Anlage gelangt. Der Querschnitt der Leiste 2 ist derart bemessen, dass ein einwandfreies Gleiten der Bügelverschlüsse 1 entlang der Leiste 2 möglich ist, d.h. es ist ein gewisses Spiel 13 zwischen dem Teil 11, der die Achsabschnitte 9 trägt, und der Leiste 2 vorgesehen. Der den Verschlusskörper 4 tragende Verschlussbügel 5 hängt bei den auf der Leiste 2 aufgefädelten Bügelverschlüssen 1 frei nach unten.

Zur Vermeidung eines Abgleitens eines Bügelverschlusses 1 von der Leiste 2, wenn diese transportiert wird bzw. in Schräglage gebracht ist, sind an deren Endbereichen 15 Sperren vorgesehen, die jeweils einen in der Leiste 2 längs verschiebbar gelagerten Stift 16 aufweisen, wobei der Stift 16 in einer Bohrung 17 der Leiste verschiebbar ist, die sich senkrecht zur Höhe 18 der Leiste 2 und parallel zu deren Breite 19 erstreckt. Der Stift 16 ist von einer Freigabestellung, in der er zur Gänze in der Leiste 2, ohne aus dieser vorzuschauen, zurückgeschoben ist, in eine Sperrstellung (vgl. Fig. 2, 3 und 4), in der er mit einem Ende über eine Seitenfläche der Leiste 2 vorragt, und retour verschiebbar. Um den Stift 16 in der Sperrstellung festzuhalten und gegen ein unbeabsichtigtes Verschieben zu sichern, ist in der Leiste ein Federbolzen 20 vorgesehen, der in eine Ringausnehmung 21 des Stiftes 16 einrasten kann, wenn sich der Stift 16 in Sperrstellung befindet.

Die Leiste 2 weist weiters sich in Richtung ihrer Höhe 18 erstreckende Manipulationsöffnungen 22 - und zwar mittig ihrer Breite 19 - auf, in die Manipulationsstifte 23 einer Manipulationseinrichtung 24 einsetzbar und an der Leiste 2 fixierbar sind. Mit Hilfe dieser Manipulationsstifte 23 kann eine Leiste 2 erfasst, angehoben, seitlich verbracht bzw. fixiert werden, ohne ein Gleiten der Bügelverschlüsse 1 entlang der Leiste 2 zu behindern, wie dies nachfolgend noch beschrieben ist.

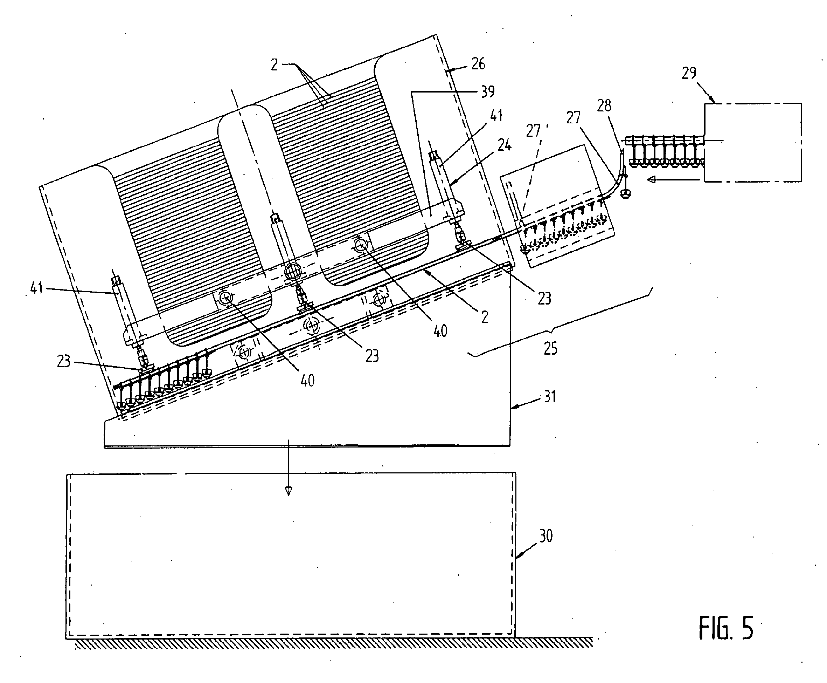

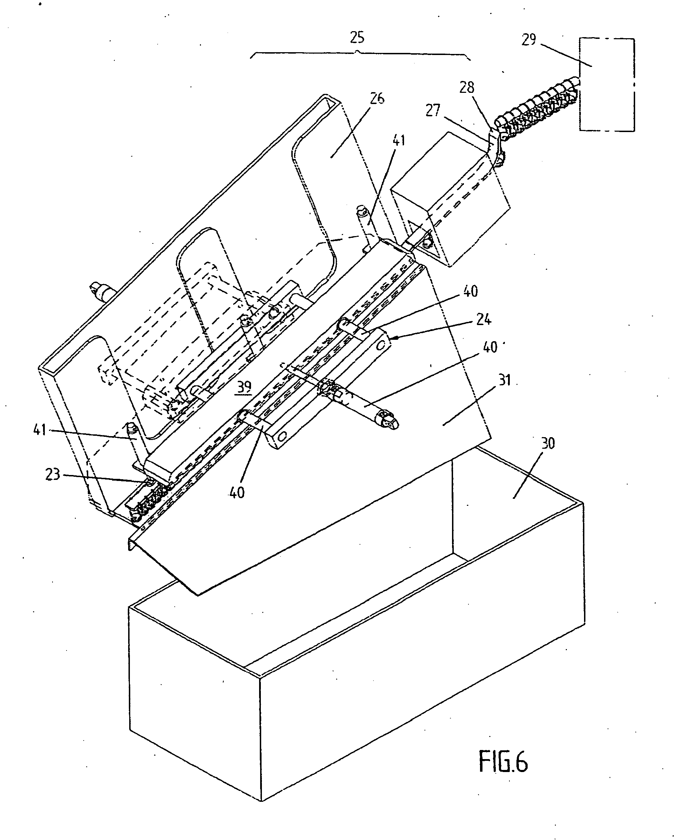

In den Fig. 5 und 6 ist eine Aufgabeeinrichtung 25 zum Aufgleitenlassen von Bügelverschlüssen 1 auf eine Leiste 2 veranschaulicht. Diese Einrichtung 25 weist ein Magazin 26 für leere Leisten 2 auf, wobei jeweils eine leere Leiste 2 aus dem Magazin 26 mittels der Manipulationseinrichtung 24 in eine Aufgabeposition verbringbar ist, in der die Leiste 2 von den Manipulationsstiften 23 - wie oben beschrieben - gehalten ist, und zwar in Schräglage, um ein selbsttätiges Gleiten der Bügelverschlüsse 1 entlang der Leiste 2 zu ermöglichen. Die Manipulationsstifte 23 greifen von oben in die Manipulationsöffnungen 22 der Leiste 2 ein, sodass die Bügelverschlüsse 1 am Gleiten entlang der Leiste 2 nicht gehindert sind, zumal die Achsabschnitte 9 der Betätigungsbügel 6 nur geringfügig über die Leiste 2 ragen, wie insbesondere aus den Fig. 2, 3 und 4 zu erkennen ist.

Fluchtend zur in Schräglage gebrachten Leiste 2 schließt eine Bogenleiste 27 der Aufgabeeinrichtung 25 an, auf deren nach oben ragendem Ende 28 die von der Erzeugungsanlage 29 für die Bügelverschlüsse 1 ausgestoßenen Bügelverschlüsse 1 aufgleiten. An dieser Bogenleiste 27 ist eine nicht näher dargestellte Zählvorrichtung üblicher Bauart angeordnet, die es ermöglicht, die Leiste 2 komplett zu füllen, wobei nach deren Füllung über ein Signal der Zählvorrichtung die gefüllte Leiste 2 losgelassen und in einen Behälter 30 über eine Rutsche 31 gelangt. Anschließend wird eine leere Leiste 2 vom Magazin 26 wiederum in Aufgabestellung gebracht. Die in der Zwischenzeit gefertigten Bügelverschlüsse 1 können an der Bogenleiste 27 gesammelt werden, die in diesem Fall als Pufferzone dient, wobei ein Abgleiten der Bügelverschlüsse 1 mittels einer Sperre 27' verhindert wird.

In den Fig. 7 bis 9 ist eine Abgabeeinrichtung 32 zum Abgeben einzelner Bügelverschlüsse 1 an eine Montagestation 33 zur Montage eines Bügelverschlusses 1 an einer Flasche 34 veranschaulicht. Die mit Bügelverschlüssen 1 versehenen Leisten 2 werden auf ein Magazin 35 aufgelegt, und zwar mit ihren Endbereichen 15 jeweils auf einer Fördereinrichtung 36, vorzugsweise ausgebildet als Förderband, sodass die Verschlusskörper 4 der Bügelverschlüsse 1 frei nach unten hängen können. Die in dem Magazin 35 an vordester Stelle befindliche Leiste 2 wird mittels einer Manipulationseinrichtung 37, die analog zur Manipulationseinrichtung 24 gestaltet ist, erfasst, angehoben, seitlich verschoben und nachfolgend abgesenkt, wobei die Bügelverschlüsse 1 mit ihren Verschlusskörpern 4 auf eine sich in Längsrichtung der Leiste 2 bewegende Fördereinrichtung 38 - vorzugsweise ist diese ebenfalls als Förderband ausgebildet - zu liegen kommen. Wie aus Fig. 7 ersichtlich ist, sind die Manipulationsstifte 23 an einem Träger 39 vorgesehen, der sich quer zur Längsrichtung der Leisten 2 entlang von Führungen 40 verschieben lässt. Hierfür kann ein Antrieb dienen, wie ein Druckmittelzylinder 40'. Zum Heben und Senken der Manipulationsstifte 23 und damit einer daran befestigten Leiste 2 dienen Druckmittelzylinder 41.

In Verlängerung der in Abgabestellung gebrachten Leiste 2 ist eine bogenförmig gestaltete Abgabeleiste 42 vorgesehen, auf welche die Bügelverschlüsse 1 durch Fördern mittels des Förderbandes 38 - die Verschlusskörper 4 werden durch Reibung mit dem Förderband 38 mitbewegt - gelangen.

An der Abgabeleiste 42 ist knapp vor ihrem Ende eine Vereinzelungsvorrichtung 43 vorgesehen, sodass jeweils nur ein Bügelverschluss 1 zum vertikal nach unten gerichteten Ende 44 der Abgabeleiste 42 gleiten kann. Die Abgabeleiste 42 selbst dient wiederum als Pufferzone, sodass stets ein Bügelverschluss 1 zur Abgabe bereit ist, selbst wenn eine Leiste 2 bereits komplett entleert ist und durch eine volle ersetzt werden muss. Die leeren Leisten 2 werden in einem Behälter 45 gesammelt, in den sie ebenfalls mit der Manipulationseinrichtung 37 gebracht werden.

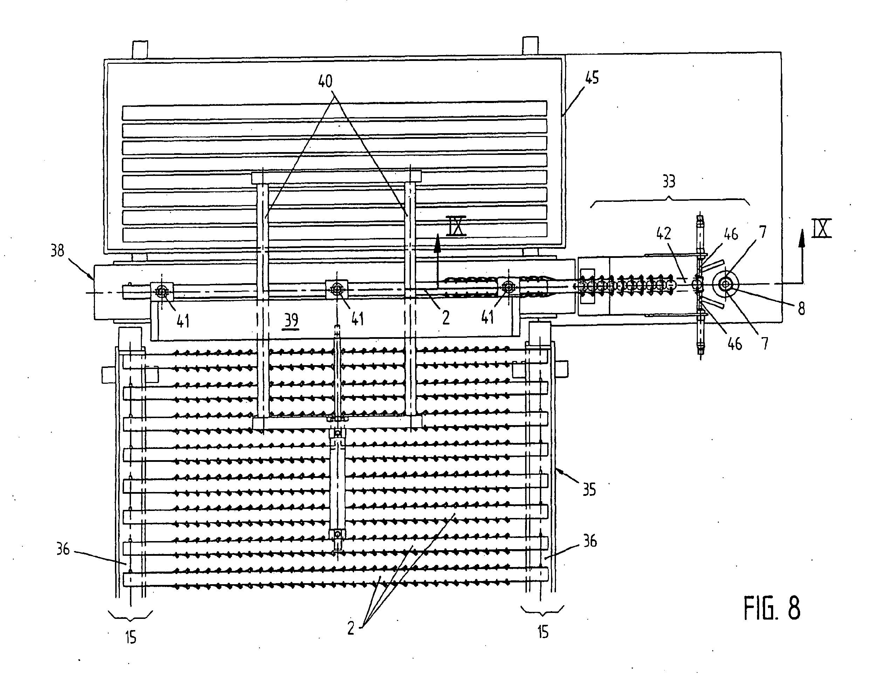

Am unteren Ende 44 der Abgabeleiste 42, die zwecks selbsttätigen Abgleitens der Bügelverschlüsse mit einem schrägen Teil zur Leiste 2 gerichtet ist, werden die Bügelverschlüsse 1 mittels Halterungen 46 gehalten, bis sie an einer Flasche 34 montiert werden. Das untere Ende 44 der Abgabeleiste 42 weist zu diesem Zweck eine mittige Ausnehmung 47 auf, sodass eine Flasche 34 mit ihrem Hals 8 zwecks Einsetzens der Achsabschnitte 9 in die Öffnungen 7 genau zentriert zum Bügelverschluss 1 in Stellung gebracht werden kann. Die Halterungen 46 können von der Halteposition, die in den Fig. 7 und 8 veranschaulicht ist, zurückgezogen werden, und zwar unter Freigabe des Bügelverschlusses 1, was dann geschieht, wenn die Achsabschnitte 9 in die Öffnungen 7 des Flaschenhalses 8 eingesetzt sind. Anschließend werden die Halterungen 46 wiederum zum unteren Ende 44 der Abgabeleiste 42 vorgeschoben, sodass der nächstfolgende Bügelverschluss 1 wiederum zwecks Montage an einer Flasche 34 in richtiger Position gehalten ist.

Die Erfindung beschränkt sich nicht auf das dargestellte Ausführungsbeispiel, sondern kann in verschiedener Hinsicht modifiziert sein. Dies betrifft unter anderem auch die Querschnittsform der Leiste 2, die auch trapezförmig, stufenförmig etc. gestaltet sein kann. Wesentlich ist ein gesichertes Gleiten der Bügelverschlüsse ab einer bestimmten Neigung der Längsachse der Leiste. Die Erfindung eignet sich für Bügelverschlüsse unterschiedlicher Bauarten, wie sie für unterschiedliche Behältnisse eingesetzt werden.

Anstelle der erfindungsgemäß eingesetzten Förderbänder könnten auch Förderketten, Förderbürsten etc. vorgesehen sein. Auch könnte ein Förderband Stollen aufweisen oder formschlüssig mit den Bügelverschlüssen in Eingriff gelangen und so eine Zwangsförderung derselben bewerkstelligen. Bei der Aufgabeeinrichtung und auch bei der Abgabeeinrichtung könnte das Verbringen der Bügelverschlüsse, also das Verbringen der Bügelverschlüsse auf die Leiste und das Verbringen der Bügelverschlüsse von der Leiste zu einem Flaschenhals, ohne bogenförmig gestaltete Leisten mittels eines Greifersystems erfolgen.

Als Manipulationseinrichtung für das Verbringen der Leisten mit oder ohne Bügelverschlüsse ließe sich auch ein Saugkopf einsetzen, der an der Leiste ansetzbar ist, wobei zweckmäßig mehrere Saugköpfe in Reihe zum Erfassen und Festhalten einer Leiste einsetzbar sind. Da der Platz zwischen den einander gegenüberliegenden Achsabschnitten 9 der Betätigungsbügel 1 beschränkt ist, wäre der Einsatz ovaler Saugköpfe zweckmäßig, wobei die Längsachse des Ovals in Richtung der Längsachse der Leiste 2 ausgerichtet ist.

## Patentansprüche

1. Verwendung einer Leiste (2) zur Lagerung und zum Transport von Bügelverschlüssen (1) von Behältnissen, vorzugsweise von Flaschen, wobei die Leiste (2) mit mindestens einem Teil ihres Querschnitts einen Querschnitt aufweist, der einem von einem Teil des Bügelverschlusses (1) eingegrenzten Querschnitt entsprechend - jedoch unter Einhaltung eines ein Gleiten der Bügelverschlüsse (1) entlang der Leiste (2) ermöglichenden Spiels (13) - gestaltet ist, und deren Länge zur Aufnahme einer Vielzahl von Bügelverschlüssen (1) bemessen ist.

2. Verwendung einer Leiste (2) zur Lagerung und zum Transport von Bügelverschlüssen (1) nach Anspruch 1, wobei die Bügelverschlüsse (1) jeweils mit einem den Verschlusskörper (4) tragenden Verschlussbügel (5) und einem daran angelenkten Betätigungsbügel (6), der mit in einander gegenüberliegende Öffnungen (7) eines Behältnisses einsetzbaren Achsabschnitten (9) versehen ist, die in Ansicht in Richtung derAchsabschnitte (9) an einem Bügelteil (11), der sich etwa rechtwinkelig von einem Betätigungsteil (10) des Betätigungsbügels (6) erstreckt, angeformt sind, und die Leiste (2) eine Breite (19) entsprechend der Breite des Bügelteils (11), an dem die Achsabschnitte (9) angeformt sind, und eine Höhe (18) entsprechend der kürzesten Distanz der Achsabschnitte (9) von einer vom Betätigungsteil (10) des Betätigungsbügels (6) gebildeten Ebene aufweist.

3. Verwendung einer Leiste (2) zur Lagerung und zum Transport von Bügelverschlüssen (1) nach Anspruch 1 oder 2, wobei die Leiste (2) endseitig mit lösbaren Sperren, die ein Aufgleiten und ein Abgleiten eines Bügelverschlusses (1) auf die bzw. von der Leiste (2) verhindern, versehen ist.

4. Verwendung einer Leiste (2) zur Lagerung und zum Transport von Bügelverschlüssen (1) nach einem der Ansprüche 1 bis 3, wobei jede Sperre einen sich senkrecht zur Höhe (18) der Leiste (2) und parallel zur Breite (19) der Leiste (2) erstreckenden und in seiner Längsrichtung in der Leiste (2) verschiebbaren Stift (16) aufweist, der vorzugsweise mittels Federkraft in Sperrstellung und vorzugsweise auch in Freigabestellung festhaltbar ist.

5. Einrichtung zum Manipulieren einer zur Lagerung und zum Transport von Bügelverschlüssen Leiste (2), die mit mindestens einem Teil ihres Querschnitts einen Querschnitt aufweist, der einem von einem Teil des Bügelverschlusses (1) eingegrenzten Querschnitt entsprechend - jedoch unter Einhaltung eines ein Gleiten der Bügelverschlüsse (1) entlang der Leiste (2) ermöglichenden Spiels (13) - gestaltet ist, und deren Länge zur Aufnahme einer Vielzahl von Bügelverschlüssen (1) bemessen ist, **dadurch gekennzeichnet, dass** die Einrichtung eine Abgabeeinrichtung (32), eine Aufgabeeinrichtung (25) und Manipulationswerkzeuge (24) umfasst, wobei die Leiste (2) mittels eines Manipulationswerkzeugs (24) von einem Magazin (35) für eine Vielzahl von mit Bügelverschlüssen (1) versehenen Leisten (2) entnehmbar und zu einer Abgabeeinrichtung (32) zum Abgeben eines Bügelverschlusses (1) und/oder dass die unbestückte Leiste (2) mittels eines Manipulationswerkzeuges (24) von einem Magazin (26) zu der Aufgabeeinrichtung (25) zum Aufgeben von Bügelverschlüssen (1) auf die Leiste (2), vorzugsweise stammend von einer Bügelverschluss-Erzeugungsanlage (29), verbringbar und in Aufgabestellung haltbar ist.

6. Einrichtung nach Anspruch 5, **dadurch gekennzeichnet, dass** die Leiste (2) mit Manipulationsöffnungen (22), in die das Manipulationswerkzeug (23) einsetzbar und an der Leiste (2) fixierbar ist, versehen ist.

7. Einrichtung nach Anspruch 5 oder 6, **dadurch gekennzeichnet, dass** die Abgabeeinrichtung (32) eine Fördereinrichtung (38) umfasst, wobei die Fördereinrichtung (38), vorzugsweise ein Förderband, mit den an der Leiste (2) befindlichen Bügelverschlüssen (1) einer oberhalb der Fördereinrichtung (38) mittels des Manipulationswerkzeuges (23) in Stellung gebrachten Leiste (2) in Kontakt gelangt und unter Mitnahme der Bügelverschlüsse (1) betätigbar ist.

8. Einrichtung nach Anspruch 7, **dadurch gekennzeichnet, dass** die Abgabeeinrichtung (32) eine bogenförmig gestaltete Abgabeleiste (42), vorzugsweise mit Querschnittsabmessungen der Leiste (2), anschließend an die in Abgabestellung gebrachte Leiste (2) zwecks Weiterförderns eines Bügelverschlusses (1) zu einer Montagestation (33) zur Montage eines Bügelverschlusses (1) an einem Behältnis aufweist.

9. Einrichtung nach Anspruch 8, **dadurch gekennzeichnet, dass** die Montagestation (33) am Ende der Abgabeleiste (42) mit ein Abgleiten eines Bügelverschlusses (1) von der Abgabeleiste (42) verhindernden Halterungen (46) versehen ist, welche Halterungen (46) von einer den Bügelverschluss (1) haltenden Stellung in eine den Bügelverschluss (1) freigebende Stellung und umgekehrt bewegbar sind.

10. Einrichtung nach einem der Ansprüche 5 bis 9, **dadurch gekennzeichnet, dass** die Abgabeeinrichtung (32) mit einer Vereinzelungseinrichtung (43) für eine Einzelabgabe jeweils eines Bügelverschlusses (1) versehen ist.

11. Einrichtung nach einem der Ansprüche 5 bis 10, **dadurch gekennzeichnet, dass** die Aufgabeeinrichtung (25) eine Bogenleiste (27), vorzugsweise mit Querschnittsabmessungen der Leiste (2), aufweist.

12. Einrichtung nach Anspruch 11, **dadurch gekennzeichnet, dass** an der Aufgabeeinrichtung (25) eine Zähleinrichtung für die auf die Leiste (2) gleitenden Bügelverschlüsse 1 und eine Sperrvorrichtung (27') zum Verhindern des Gleitens eines Bügelverschlusses (1) auf die Leiste (2) vorgesehen ist.

13. Einrichtung nach einem der Ansprüche 5 bis 12, **dadurch gekennzeichnet, dass** das Manipulationswerkzeug zumindest einen Saugkopf umfasst, der an der Leiste (2) ansetzbar ist und über Mitnahme der Leiste (2) zur Aufgabeeinrichtung (25) und/oder Abgabeeinrichtung (32) bewegbar ist.

14. Einrichtung nach Anspruch 13, **dadurch gekennzeichnet, dass** zwei oder mehrere Saugköpfe in Reihe zum Ansetzen an einer Leiste (2) vorgesehen sind und dass die Saugköpfe vorzugsweise eine in Richtung der aufzunehmenden Leiste (2) ausgerichtete Ovalform aufweisen.

## Claims

1. Use of a band (2) for storing and transporting swing top closures (1) of containers, preferably bottles, wherein the band (2) has a cross-section with at least a part of its cross-section corresponding to a cross-section enclosed by an element of the swing top closure (1) - guaranteeing, however, a tolerance distance (13) allowing for a sliding of the swing top closures (1) alongside the band (2)-, and wherein the length of which is dimensioned so that it may incorporate a multitude of swing top closures (1).

2. Use of a band (2) for storing and transporting swing top closures (1) according to claim 1, wherein the swing top closures (1) each are provided with a closure pin (5) bearing the closure body (4) and an actuation pin (6) hinged thereto, which is provided with axis segments (9), which can be inserted in openings (7) opposing each other and which are provided in an elevated view in the direction of the axis segments (9) at a pin element (11) extending approximately orthogonally from an actuation element (10) of the actuation pin (6), and wherein the band (2) has a width (19) corresponding to the width of the pin element (11), at which there are provided the axis segments (9), and a height (18) corresponding to the shortest distance of the axis segments (9) from a plane formed by the actuation element (10) of the actuation pin (6).

3. Use of a band (2) for storing and transporting swing top closures (1) according to claim 1 or 2, wherein the band (2) is provided at its ends with detachable locks preventing the sliding of a swing top closure (1) onto and off the band (2), respectively.

4. Use of a band (2) for storing and transporting swing top closures (1) according to one of the claims 1 to 3, wherein each lock comprises a pin (16) extending orthogonally to the height (18) of the band (2) and in parallel to the width (19) of the band (2) and being movable along its longitudinal direction in the band (2), which may be held in a lock position preferably by means of spring pressure and preferably also in a release position.

5. Device for manipulating a band (2) for storing and transporting swing top closures (1) which has a cross-section with at least a part of its cross-section that corresponds to a cross-section enclosed by an element of the swing top closure (1) - guaranteeing, however, a tolerance distance (13) allowing for a sliding of the swing top closures (1) alongside the band (2)-, and the length of which is dimensioned so that it may incorporate a multitude of swing top closures (1), **characterised in that** the device includes a discharging device (32), a charging device (25) and manipulation tools (24), wherein the band (2) may be released by means of a manipulation tool (24) from a magazine (35) for a multiplicity of bands (2) provided with swing top closures (1) and wherein it may be moved to a discharging device (32) for discharging a swing top closure (1) and/or that the uncharged band (2) may be moved from a magazine (26) to the charging device (25) for charging swing top closures (1) onto the band (2), preferably originating of a production plant for swing top closures (29), and that it may be held in its charging position by means of a manipulation tool (24).

6. Device according to claim 5, **characterised in that** the band (2) is provided with manipulation openings (22), into which the manipulation tool (23) may be inserted and attached at the band (2).

7. Device according to claim 5 or 6, **characterised in that** the discharging device (32) comprises a conveying device (38), with the conveying device (38), preferably a conveyor belt, contacting the swing top closures (1) arranged at the band (2) which is positioned above the conveying device (38) by means of the manipulation tool (23), and being operable, while entraining the swing top closures (1).

8. Device according to claim 7, **characterised in that** the discharging device (32) has a bow-like designed discharging band (42), preferably with a cross-sectional dimension of the band (2), which is arranged following the band (2) being set into a discharging position for conveying a swing top closure (1) to a mounting station (33) for mounting a swing top closure (1) on a container.

9. Device according to claim 8, **characterised in that** the mounting station (33) at the end of the discharging band (42) is provided with clamps (46) preventing the sliding of a swing top closure (1) off the discharging band (42), with the clamps (46) being movable from a position in which one of the swing top closures (1) is fastened into a position in which the swing top closure (1) is discharged, and vice versa.

10. Device according to one of the claims 5 to 9, **characterised in that** the discharging device (32) is provided with an isolating device (43) for an individual discharge of every single swing top closure (1).

11. Device according to one of the claims 5 to 10, **characterised in that** the charging device (25) has a bow band (27), preferably with the cross-sectional dimensions of the band (2).

12. Device according to claim 11, **characterised in that** there is provided at the charging device (25) a counter device for the swing top closures (1) gliding on the band (2) and a lock device (27') for preventing the gliding of a swing top closure (1) onto the band.

13. Device according to one of the claims 5 to 12, **characterised in that** the manipulation tool comprises at least one suction head, which may be fastened at the band (2) and which may be moved while entraining the band (2) towards the charging device (25) and/or discharging device (32).

14. Device according to claim 13, **characterised in that** there are provided two or more suction heads in alignment for attachment at a band (2) and that the suction heads have an oval form that is preferably oriented into the direction of the band (2) to be charged.

## Revendications

1. Utilisation d'une barrette (2) pour le stockage et pour le transport de fermetures à étrier (1) de récipients, de préférence de bouteilles, dans laquelle la barrette (2) présente sur au moins une partie de sa section transversale une section transversale qui est conçue de manière à correspondre à une section transversale délimitée par une partie de la fermeture à étrier (1) - mais en respectant un jeu (13) permettant un coulissement des fermetures à étrier (1) le long de la barrette (2) -, et dont la longueur est choisie pour recevoir une pluralité de fermetures à étrier (1).

2. Utilisation d'une barrette (2) pour le stockage et pour le transport de fermetures à étrier (1) selon la revendication 1, dans laquelle chaque fermeture à étrier (1) est pourvue d'un étrier de fermeture (5) qui porte le corps de fermeture (4) et d'un étrier d'actionnement (6) articulé sur l'étrier de fermeture et pourvu de tronçons d'axes (9) susceptibles d'être mis en place dans des ouvertures (7) mutuellement opposées d'un récipient, lesquelles sont conformées, lorsqu'on les voit en direction des tronçons d'axes (9), sur une partie (11) d'étrier qui s'étend approximativement à angle droit depuis une partie d'actionnement (10) de l'étrier d'actionnement (6), et la barrette (2) présente une largeur (19) qui correspond à la largeur de la partie d'étrier (11) sur laquelle sont conformés des tronçons d'axe (9) et une hauteur (18) qui correspond à la distance la plus courte des tronçons d'axe (9) depuis un plan formé par la partie d'actionnement (10) de l'étrier d'actionnement (6).

3. Utilisation d'une barrette (2) pour le stockage et pour le transport de fermeture à étrier (1) selon la revendication 1 ou 2, dans laquelle la barrette (2) est dotée à son extrémité de verrouillages libérables, qui empêchent un coulissement d'une fermeture à étrier (1) sur la barrette (2) ou respectivement en quittant cette barrette.

4. Utilisation d'une barrette (2) pour le stockage et pour le transport de fermetures à étrier (1) selon l'une des revendications 1 à 3, dans laquelle chaque verrouillage comprend une tige (16) qui s'étend perpendiculairement à la hauteur (18) de la barrette (2) et parallèlement à la largeur (19) de la barrette (2) et qui peut être mise en translation dans sa direction longitudinale dans la barrette (2), ladite tige pouvant être immobilisée dans la position de verrouillage de préférence au moyen de la force d'un ressort, et de préférence également dans la position de libération.

5. Système pour manipuler une barrette (2) pour le stockage et pour le transport de fermetures à étrier, laquelle présente sur au moins une partie de sa section transversale une section transversale qui est conçue de manière à correspondre à une section transversale délimitée par une partie de la fermeture à étrier (1) - mais en respectant un jeu (13) permettant un coulissement des fermetures à étrier (1) le long de la barrette (2) -, et dont la longueur est choisie pour recevoir une pluralité de fermetures à étrier (1)
**caractérisé en ce que** le système comprend un moyen de remise (32) et un moyen de reprise (25) et des outils de manipulation (24), ladite barrette (2) pouvant être prélevée, au moyen d'un outil de manipulation (24), depuis un magasin (35) pour une pluralité de barrettes (2) dotées de fermetures à étrier (1), et amenée à un moyen de distribution (32) pour distribuer une fermeture à étrier (1) et/ou **en ce que** la barrette (2) non chargée peut être amenée au moyen d'un outil de manipulation (4) depuis un magasin (26) vers le moyen de reprise (25) pour la reprise de fermetures à étrier (1) sur la barrette (2), de préférence en provenance d'une installation de production de fermetures à étrier (29), et peut être maintenue dans la position de reprise.

6. Système selon la revendication 5, **caractérisé en ce que** la barrette (2) est pourvue d'ouvertures de manipulation (22), dans lesquelles l'outil de manipulation (23) peut être mis en place et fixé sur la barrette (2).

7. Système selon la revendication 5 ou 6, **caractérisé en ce que** le moyen de remise (32) comprend un moyen de convoyage (38), ledit moyen de convoyage (38), de préférence une bande de convoyage, parvenant en contact avec les fermetures à étrier (1) se trouvant sur la barrette (2), dans le cas d'une barrette (2) qui a été amenée en position au-dessus du moyen de convoyage (38) au moyen de l'outil de manipulation (23), et pouvant être actionné en entraînant les fermetures à étrier (1).

8. Système selon la revendication 7, **caractérisé en ce que** le moyen de remise (32) comprend une barrette de remise (42) conçue sous forme arquée, de préférence avec les dimensions de section transversale de la barrette (2), à la suite de la barrette (2) amenée en position de remise dans le but d'une poursuite du convoyage d'une fermeture à étrier (1) à une station de montage (33) pour le montage d'une fermeture à étrier (1) sur un récipient.

9. Système selon la revendication 8, **caractérisé en ce que** la station de montage (23) est pourvue, à la fin de la barrette de remise (42), de supports (46) qui empêchent un glissement d'une fermeture à étrier (1) en tombant de la barrette de remise (42), lesdits supports (46) étant déplaçables depuis une position qui maintient la fermeture à étrier (1) jusqu'à une position qui libère la fermeture à étrier (1) et inversement.

10. Système selon l'une des revendications 5 à 9, **caractérisé en ce que** le moyen de reprise (25) est pourvu d'un moyen de séparation (43) pour une reprise individuelle d'une fermeture à étrier respective (1).

11. Système selon l'une des revendications 5 à 10, **caractérisé en ce que** le moyen de reprise (25) comprend une barrette cintrée (27), de préférence avec des dimensions de section transversale de la barrette (2).

12. Système selon la revendication 11, **caractérisé en ce qu'**il est prévu sur le moyen de reprise (25) un dispositif de comptage pour les fermetures à étrier (1) qui coulissent sur la barrette (2), et un dispositif de blocage (27') pour empêcher le coulissement d'une fermeture à étrier (1) sur la barrette (2).

13. Système selon l'une des revendications 5 à 12, **caractérisé en ce que** l'outil de manipulation comprend au moins une ventouse, qui peut être appliquée sur la barrette (2) et qui peut être déplacée, par entraînement de la barrette (2), vers le moyen de reprise (25) et/ou vers le moyen de remise (32).

14. Système selon la revendication 13, **caractérisé en ce qu'**il est prévu deux ou plusieurs ventouses en série, destinées à être appliquées sur une barrette (2), et **en ce que** les ventouses présentent de préférence une forme ovale orientée dans la direction de la barrette (2) qui assure la reprise.
